# EUROPEAN PATENT APPLICATION

(11) **EP 4 528 956 A1**
(43) Date of publication of application: **26.03.2025**
(21) Application number: 23306594.5
(22) Date of filing: 25.09.2023
(51) Int. Cl.: H02J 3/00, H02J 3/38, H02H 3/027, H02H 3/20, H02H 3/24, H02H 3/247, H02H 3/34

(54) **METHOD FOR PROTECTING A MICROGRID FROM A VOLTAGE DROP OR SAG OCCURRING IN A MAIN GRID CONNECTED TO SAID MICROGRID**

(71) Applicant: SCHNEIDER ELECTRIC INDUSTRIES SAS, 92500 Rueil-Malmaison (FR); Institut Polytechnique de Grenoble, 38000 Grenoble (FR); Université Grenoble Alpes, 38400 Saint-Martin-d'Hères (FR); Centre National de la Recherche Scientifique, 75016 Paris (FR)
(72) Inventor: KAMAJAYA, Samuel, 38000 GRENOBLE (FR); WILD, Jean, 38500 COUBLEVIE (FR); CAIRE, Raphael, 38100 GRENOBLE (FR); BACHA, Seddik, 38320 EYBENS (FR); BUIRE, Jerome, 38360 SASSENAGE (FR)
(74) Representative: Lavoix

(57) **Abstract**

The application relates to a method for protecting a microgrid from a voltage drop or sag occurring in a main grid connected to said microgrid, the method comprising the following steps:
a. supplying (105) power to the microgrid through the main grid;
b. ascertaining that the voltage drop or sag is occurring in the main grid by executing the following steps:
i. measuring (110) an instantaneous output voltage;
ii. comparing (130) the measured instantaneous output voltage with a reference instantaneous output voltage;
iii. Incrementing (140) a counter when the measured instantaneous output voltage differs from the reference instantaneous output voltage by more than a voltage threshold; and
iv. ascertaining (150) that the voltage drop or sag is occurring in the main grid when the counter holds a value that exceeds a counter threshold; and

c. disconnecting the microgrid from the main grid when the voltage drop or sag occurring in the main grid has been ascertained.

## Description

The present invention relates to the field of microgrids for the generation and distribution of electricity. More particularly, the invention relates to a method for protecting a microgrid from a voltage drop or sag occurring in a main grid connected to said microgrid.

An islanded microgrid is generally a local electrical grid intended to generate and distribute electrical power in regions that are remote from large electrical energy generation centers. Isolated regions are, for example, islands, mountainous regions or desertic areas. The microgrid principle is nevertheless and as well applicable for a building, neighbourhood, campus or other entity connected to a main grid or wide distribution grid, who wishes to manage the generation or storage of its energy differently and/or to increase its capacity for resilience.

Islandable microgrids are made up of various types of energy resources that are spatially distributed and can be disconnected from a main grid. Such microgrids are set up as autonomous islands for energy supply. These distributed resources may include renewable energy resources, such as photovoltaic cells, solar panels and wind turbines. They further may include engine-generator energy resources, such as fuel or gas consuming engines or turbines. And they may comprise energy storage facilities for locally storing energy, which may include chemical type storage such as batteries or mechanical type storage such as flywheels.

The main advantage of islanded microgrids is that they can operate intrinsically autonomously, i.e. in island mode, without connection to the public grid, and are located in proximity to the areas of consumption, the loads. They can nevertheless be interconnected to upstream grids. Thus, the losses inherent to weak distribution grids are reduced.

A voltage outage, such as a voltage sag, or voltage drop is one of the most common power quality issue in an electrical network, as for instance the main grid. This disturbance is mostly caused by faults in a component of the electrical network. According to IEEE 1159, voltage sag is a reduction in the root mean square (RMS) value in the range of 0.1 and 0.9 of the nominal voltage. If the remaining voltage is less than 0.1 of the nominal voltage it is considered as interruption. This phenomenon may cause tripping of sensitive electronic equipment with possible large consequences in the microgrid. Within some microgrid, the sensitive equipments may be protected by Uninterrupted Power Supply (UPS).

In three phase electrical grid, voltage sag can occur on single phase or phase-phase.

In a new energy landscape, more and more renewable energy resources are interconnected in the microgrids. Namely Battery Energy Storage Systems (BESS) that are charged to store excess energy from PV production and discharged when the tariff of electricity is high (in the peak period). In addition, BESS can be used as backup resources within the microgrid in case of blackouts (power outages).

On the one hand, three phase UPS technology used in microgrids (industrial sites or data centers) are based on a double conversion topology. Double conversion or AC - DC - AC topology allows decoupling between the main grid and the loads of the microgrid. Therefore, the power supplied to the load is independent of the grid voltage of the main grid. On the other hand, the topology of BESS is parallel with the load. To be able to protect the load from grid disturbance, the load needs to be isolated from the grid and then the power can be supplied to the load from the BESS.

In the case of grid disturbance, disconnecting the microgrid from the main grid needs a fast and reliable decision. Most electronic loads can handle up to 20ms without electric supply, thus the transition from grid connected to islanded shall be done within this limit. However, if the detection is too sensitive, it could lead to false decisions and microgrid will be disconnected too often from the grid.

Some devices had been already developed and used to detect a loss of main in different applications, namely: protection relay for low voltage or medium voltage installation sites; anti-islanding for inverter-based generation; or loss of main detection system in the UPS.

Most protection elements today use voltage and current phasors measurement, i.e., they operate on positive, negative or zero network components. These elements need a data window of about one cycle to measure the phasors accurately enough for efficient protection.

Classically, anti-islanding function in inverter will detect loss of main in 150ms. Furthermore, the requirements for anti-islanding detection for inverter application are 2 seconds in United States and 0.2 seconds in Japan.

Type 3 UPS can detect loss of main and switch rapidly to backup mode in less than 20ms. Usually, the UPS is using RMS value or half-cycled RMS value. Some UPS can use more advanced algorithms that can make transfers in less than 6ms. However, for UPS application, the false positive detection will not penalize the operation as it is considered as a load from the grid side. In microgrid, if the protection is set to be sensitive, there will be a risk of unwanted islanding transfer.

An object of the invention is a method to detect a voltage drop or sag occurring in a main grid for microgrid application.

This object is achieved by a method for protecting a microgrid from a voltage drop or sag occurring in a main grid connected to said microgrid according to claim 1, an electrical controller according to claim 7 and a microgrid according to claim 10.

Optional features of the invention are set out in the dependent claims.

Advantageously, the method of the invention is capable of detecting, instantaneously, a drop or sag occurring in the main grid connected to the microgrid, as well as a short interruption in the main grid. In other words, the method is capable of detecting loss of main grid. Advantageously, the detection is reliable in less than 3 ms.

Features of the preferred embodiment described below will be apparent when read in conjunction with the drawings, wherein:
Fig. 1 is schematic representation of a microgrid comprising an electrical controller configured to implement a protection of the microgrid from a voltage drop or sag occurring in a main grid connected to said microgrid according to a preferred embodiment;
Fig. 2 is a flowchart depicting a method for protecting a microgrid from a voltage drop or sag occurring in a main grid connected to said microgrid according to a preferred embodiment;
Fig. 3 is a chart depicting a reference instantaneous output voltage and a measured instantaneous output voltage measured between two lines of the main grid;
Fig. 4 is graph showing different voltage immunity standards;
Fig. 5 is a graph showing an example of a permissible voltage boundary curve; and
Fig. 6 is a flowchart of complementary steps of a method for protection a microgrid from a voltage drop or sag.

The application relates to a method for protecting a microgrid from a voltage drop or sag occurring in a main grid connected to said microgrid, to an electrical controller for protecting a microgrid from the voltage drop or sag occurring in the main grid connected to said microgrid and to a microgrid comprising such an electrical controller. The voltage drop or sag occurring in said main grid can be called a loss of main.

The application also related to a microgrid comprising an electronic controller configure to implement the protecting method.

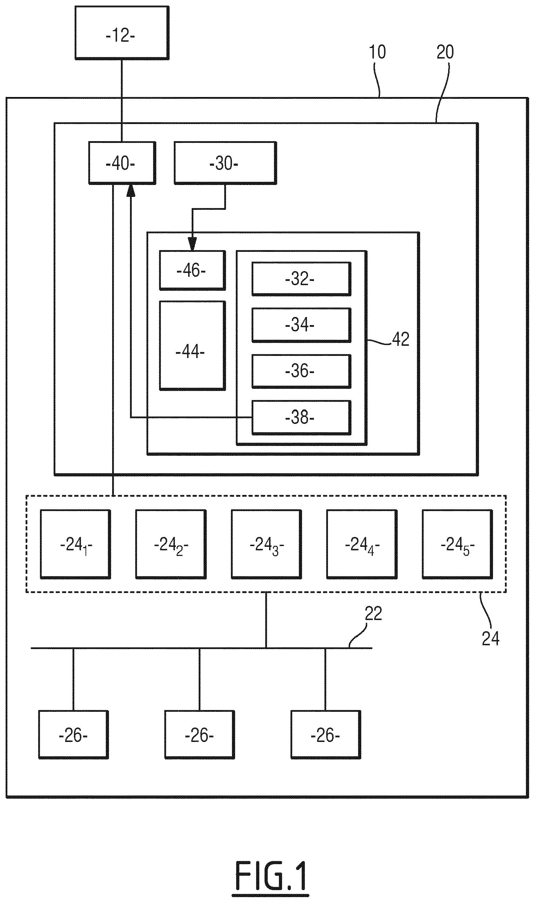

Figure 1 illustrates schematically a microgrid 10 according to an embodiment.

The microgrid 10 is connected to a main grid 12.

The main grid 12 may be a single-phase electrical grid comprising a phase line and a neutral line. As an alternative, the main grid may be a three-phase electrical grid comprising three phase line and a neutral line. In any of both cases, the main grid comprises at least two lines.

According to an embodiment, the main-grid is three-phase and neutral grid, and therefore comprises four conductor lines which are three phase lines and a neutral line.

According to a variant, the main grid is a single phased and comprises a phase line and a neutral line.

The microgrid 10 generally corresponds to a local electrical network intended to produce and distribute electrical energy. The local electrical network can be for instance situated in isolated regions far from the large electrical energy production centers. The isolated regions are, for example, islands, mountainous regions, or desert areas. The microgrid principle also applies when a building, district, campus, or other entity connected to an extensive distribution network intends on managing the energy production thereof differently and increase the resilience capability thereof.

The main interest of microgrids is that they can operate autonomously (in islanded mode, without connection to the public network), and are located in proximity to the consumption areas (the loads). Thus, the losses inherent in the long-distance distribution networks are limited.

The microgrid 10 comprises the electrical controller 20 for protecting the microgrid from the voltage drop or sag occurring in the main grid. The microgrid can comprise a plurality of electrical conductors 22, one or more electrical power sources 24 and one or more electrical loads 26. The power sources 24 and the electrical loads 26 are connected through electrical conductors 22. The electrical loads are intended to consume, at least partly, the power delivered by the electrical power sources.

The power sources 24 may include a photovoltaic system 24₁, wind turbines 24₂, 24₃ an electric generator 24₄ and a Battery Energy Storage System (BESS) 24₅. The electric generator may be an inverter-based generator in parallel connection. The Battery Energy Storage System is configured to store excess energy from production of the photovoltaic system and/or the wind turbine(s) for instance and can be used to store energy provided by the main grid when the tariff of electricity is low. The Battery Energy Storage System is further configured to release stored energy when the microgrid is disconnected from the main grid due to the voltage drop or sag or when the microgrid is disconnected from the main grid in the event of high tariffs of electricity provided by the main grid.

The inverter-based generator can support a transient during disconnection by switching its mode from a grid connected to a grid forming mode.

In the case of grid disturbance occurring in the main grid 12, disconnecting the microgrid 10 from the main grid needs a fast and reliable decision. Most of electronic loads of the microgrid can handle up to 20 milliseconds without electric supply, thus the transition from grid connected mode to grid forming or islanded mode shall be done within this limit. However, if the decision is too sensitive, it could lead to false detection and the microgrid will unnecessarily be disconnect from the grid.

The electrical controller 20 according to the present application comprises:
- at least one instantaneous output voltage measuring unit 30 configured to measure an instantaneous output voltage MOV between two lines of the main grid;
- at least one reference instantaneous output voltage signal generation unit 32 configured to generate a reference instantaneous output voltage ROV signal for the two lines;
- a comparing unit 34 configured to compare a measured instantaneous output voltage MOV between the two lines with the reference instantaneous output voltage ROV signal for the two lines;
- a counter incrementing unit 36 configured to increment a counter when the measured instantaneous output voltage MOV differs from the reference instantaneous output voltage ROV signal by more than a given voltage threshold;
- a counter evaluation unit 38 configured to ascertain the voltage drop or sag occurring in the main grid when the counter holds a value that exceeds a counter threshold; and
- a switch 40 configured to be arranged between the main grid 12 and the microgrid 10 and configured to be opened by the electrical controller 20 when the counter evaluation unit 38 ascertains the voltage drop or sag.

The electrical controller 20 is configured for executing the steps of the method according to the present application.

The switch 40 may be a thyristor based static switch, silicon-controlled rectifier, solid state breaker, or hybrid breaker. Preferably, the switch 40 is a fast disconnecting switch.

The reference instantaneous output voltage signal generation unit 32 may comprise a Double Decoupled Synchronous Frame Phase Locked Loop.

The instantaneous output voltage measuring unit 30 can be a voltage sensor connected to the two lines of the main grid and configured to sense a voltage between the two lines.

According to an embodiment, as shown in figure 1, the electrical controller 20 comprises a central processing unit 42 and a memory 44. The electrical controller further comprises an interface 46 configured to be connected to the instantaneous output voltage measuring unit and/or to the voltage sensor.

The central processing unit 42, the memory 44 and the interface 46 are adapted to communicate via an internal communication bus (not represented), and form a programmable device.

The reference instantaneous output voltage signal generation unit 32, the comparing unit 34, the counter incrementing unit 36 and/or the counter evaluation unit 38 can be implemented by the programmable device formed by the central processing unit 42, the memory 44 and the interface 46. Accordingly, the central processing unit 42 may be configured to retrieve a signal from the instantaneous output voltage measuring unit 30 (for example from the voltage sensor) through the interface 46.

The central processing unit 42 may be configured to store a value representing the measured voltage MOV in the memory 44.

The central processing unit 42 may further be configured compute a signal from the reference instantaneous output voltage signal generation unit 32. The central processing unit 42 may be configured to store a value representing the reference instantaneous output voltage ROV signal in the memory 44.

The electrical controller 20 can be configured to compare the measured instantaneous output voltage MOV between the two lines with the reference instantaneous output voltage ROV signal for the two lines, configured to increment the counter when the measured instantaneous output voltage MOV differs from the reference instantaneous output voltage signal ROV by more than a voltage threshold and/or configured to determine that the counter holds a value that exceeds the counter threshold.

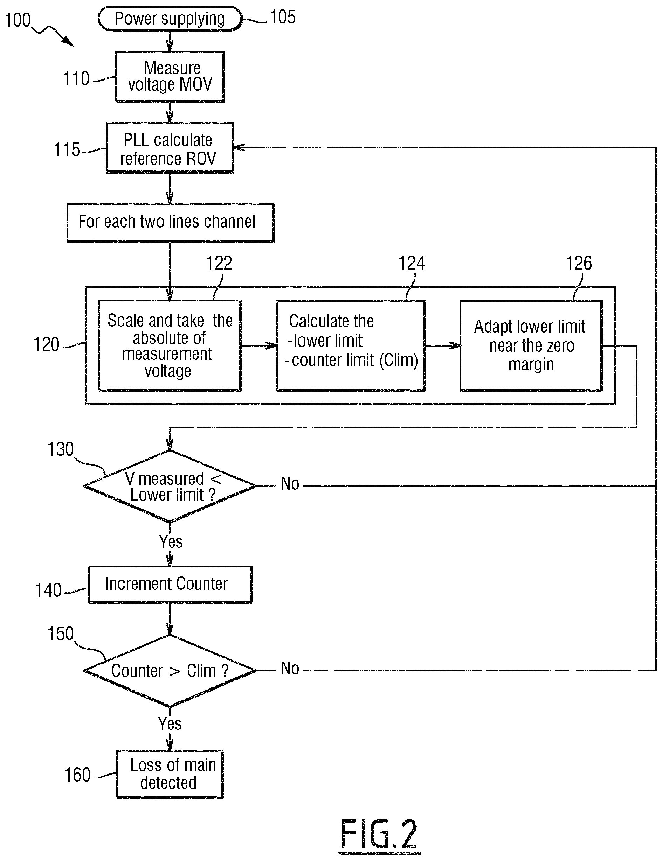

Figure 2 is a flowchart of a method 100 for protecting a microgrid from a voltage drop or sag occurring in a main grid connected to the microgrid according to an embodiment.

The method 100 according to the present application comprises the following steps, as shown in figure 2:
a. supplying power 105 to the microgrid through the main grid;
b. ascertaining that the voltage drop or sag is occurring in the main grid by executing the following steps on at least two lines of the main grid:
   i. measuring 110 an instantaneous output voltage MOV between the two lines of the main grid;
   ii. comparing 130 the measured instantaneous output voltage MOV between the two lines with a reference instantaneous output voltage ROV for the two lines;
   iii. incrementing 140 a counter when the measured instantaneous output voltage MOV differs from the reference instantaneous output voltage ROV by more than a voltage threshold; and
   iv. ascertaining 150 that the voltage drop or sag is occurring in the main grid when the counter holds a value that exceeds a counter threshold Clim; and
c. disconnecting 160 the microgrid from the main grid when the voltage drop or sag occurring in the main grid has been ascertained by opening a switch connecting the main grid to the microgrid.

The method according to the present application ensures a normal operation of the electrical loads of the microgrid. The method according to the present application is further configurable to avoid premature detection.

The disconnection of the microgrid from the main grid when the voltage drop or sag occurring in the main grid can also be referred to as islanding the microgrid.

According to an embodiment, the method comprises generating 115 the reference instantaneous output voltage ROV signal by means of a Double Decoupled Synchronous Frame Phase Locked Loop.

For a three phase main grid, the measured voltage is split into six channels, each channel corresponding to the instantaneous output voltage measured between the two lines of the main grid, which are respectively, considering three phases lines referenced A, B, C and a neutral line referenced N : V_{AB}, V_{AC}, V_{BC}, V_{AN}, V_{BN}, V_{CN}.

In the case of the singled phased main grid, the measured voltage MOV corresponds to a single channel, corresponding to the instantaneous output voltage measured between the phase and neutral line of the main grid.

The method is applied for each two lines channel (also called couple of lines), and the instantaneous output voltage measured between two lines is referred to as MOV below.

In other words, in case the main grid is a three-phase grid having three phase lines and one neutral line, the steps b.i to b.iv are executed for each couple of lines consisting of a phase-to-phase couple and/or a phase-to-neutral couple. In case the main grid is a three-phase grid, the steps b.i to b.iv are executed for six couples of lines : three couples consisting of two phase lines and three couples consisting of a phase and the neutral line.

According to the illustrated embodiment, the method also comprises a step 120 of computing the voltage threshold.

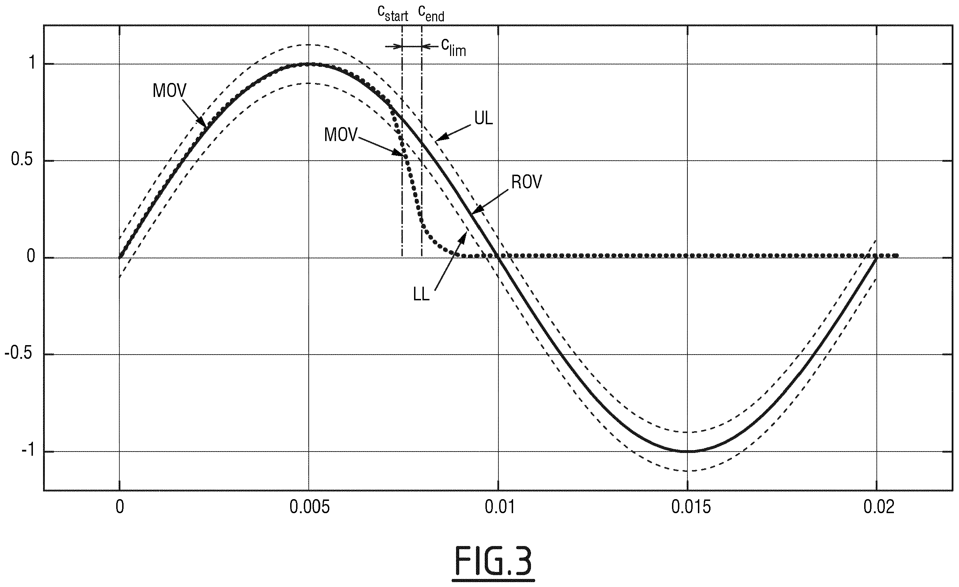

The voltage threshold computing 120 comprises a formatting step 122 comprising scaling the voltage measurement between predetermined bound values, as shown in figure 3, and taking the absolute value of the voltage measurement, for both the measured instantaneous output voltage and the reference instantaneous output voltage ROV.

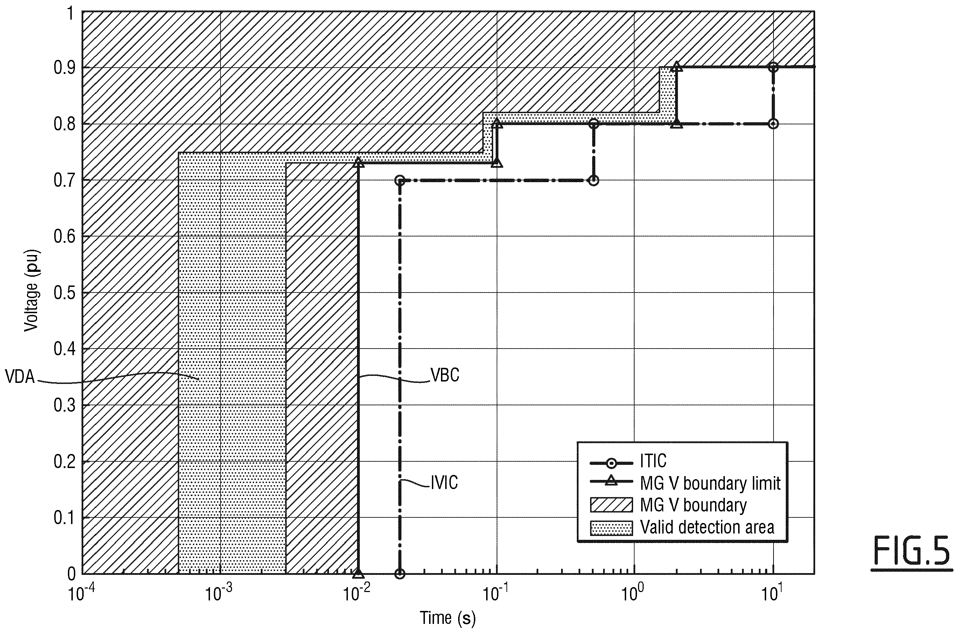

Further, step 120 comprises calculating 124 a voltage lower limit LL, from the reference instantaneous output voltage ROV, as well as the counter threshold value Clim, based on the specification of tripping curves according to one or several standards (see for example boundary limits in figure 5). In particular, the counter threshold value Clim is determined to fit the detection time with a tripping curve. The counter threshold value Clim may be precalculated and stored.

For example, the voltage lower limit LL is computed as a percentage of the absolute value if the reference instantaneous output voltage ROV.

Optionally, for optimization purposes, the step 120 further comprises adapting 126 the lower limit near the zero margin. For example, if the reference instantaneous output voltage ROV is smaller than a lower bound value ROV-low, the lower limit LL takes a predetermined value.

The method then comprises, as an embodiment of comparing 130 the measured instantaneous output voltage MOV between the two lines with a reference instantaneous output voltage ROV for the two lines, a comparison of the measured instantaneous output voltage MOV (which is an absolute value in this embodiment) to the computed lower limit LL, and if the measured instantaneous output voltage MOV is lower than the lower limit LL, the counter is incremented (step 140). Otherwise, the comparison 130 is followed by continuing the processing.

It is to be noted the comparison 130 is equivalent to comparing the difference between the reference instantaneous output voltage ROV and the measured instantaneous output voltage MOV to the difference between the reference instantaneous output voltage ROV and the lower limit. In other words, the comparison 130 allows determining whether the measured instantaneous output voltage MOV differs from the reference instantaneous output voltage ROV by more than a voltage threshold.

The counter may be incremented (step 140) by a value corresponding to an absolute value of a difference between the measured instantaneous output voltage MOV and the reference instantaneous output voltage ROV signal.

Disconnecting the microgrid from the main grid when the voltage drop or sag occurring in the main grid has been ascertained can be achieved by opening the thyristor based static switch connecting the main grid to the microgrid.

The steps b.i to b.iv may be repeated periodically, preferably every 0.5 microseconds to 1 milliseconds.

Preferably, the voltage threshold may be set to a value between 0 and 90% of nominal voltage.

The counter threshold Clim may be set to a value between 1 milliseconds and 20 milliseconds.

Figure 3 shows a chart depicting the reference instantaneous output voltage ROV and the measured instantaneous output voltage MOV measured between two lines of the main grid. The two lines may also be referred to as a channel.

Based on the reference instantaneous output voltage ROV and the voltage threshold, an upper limit UL and a lower limit LL are calculated. When the measured instantaneous output voltage MOV is above the upper limit UL (when the voltage is negative) or is below the lower limit LL (when the voltage is positive), the measured instantaneous output voltage MOV differs from the reference instantaneous output voltage ROV by more than the voltage threshold.

In figure 3, the measured instantaneous output voltage MOV goes below the lower limit LL at a first instant C_{Start}. Starting at the first instant C_{Start}, the counter is incremented, preferably by the value corresponding to the absolute value of the difference between the measured instantaneous output voltage MOV and the reference instantaneous output voltage ROV. The counter is further incremented until the counter exceeds the counter threshold at a second instant C_{End}, where C_{End}=C_{Start}+Clim. At the second instant C_{End}, the voltage drop or sag is occurring in the main grid is detected.

The upper limit UL and/or the lower limit LL may have a fixed part and linear part to deal for calculation near zero crossing.

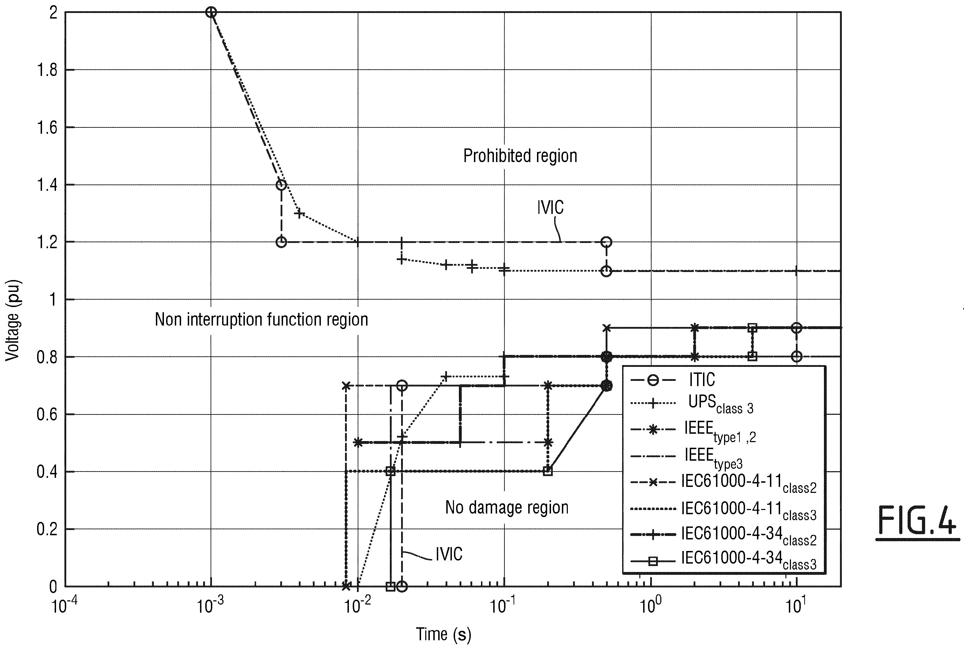

Figure 4 is graph showing different voltage immunity standards. Most of computerized devices like personal computer and server follows the ITIC (Information Technology Industry Council) voltage immunity curve IVIC (for Impulse Voltage Insulation Class). As depicted in figure 4, the voltage sag or drop is tolerable for 10 milliseconds. Taken into account the delay of opening static switch 6.6 milliseconds, detection of the voltage sag or drop is preferably detected within 3.3 milliseconds. The detection within 3.3 milliseconds ensures a normal operation of the electrical loads of the microgrid.

Figure 5 is a graph showing an example of a permissible voltage boundary curve VBC. The permissible voltage boundary curve VBC may be compiled from several standards, preferably including the ITIC standard. The several standards may include: ITIC, UPS class 3, IEEE type 1, IEEE type 2, IEEE type 3, IC61000-4-11 class 2, IC61000-4-11 class 3, IC61000-4-34 class 2, IC61000-4-34 class 3. The permissible voltage boundary curve VBC may hence be chosen to lie within the limits of a no interruption function region of the chosen several standards. The no interruption function region is depicted in figure 4.

The method according to the present application can be configured by defining the permissible voltage boundary curve VBC. Hence, the method according to the present application allows for the tripping curve to be compiled from several standards depending the needs of the consumer and/or depending on applications. The boundary curve VBC is used to calculate the lower limit LL and the counter threshold value Clim.

As in the example given in figure 5, to comply with the chosen standards, the microgrid can tolerate voltage between 0 - 0.72 times the nominal voltage for 10ms, then between 0.72-0.8 times the nominal voltage for 100ms, then between 0.8-0.9 times the nominal voltage for 2 seconds. Accordingly, the voltage threshold and the counter threshold can be chosen such that a voltage between 0 - 0.72 times the nominal voltage for 10ms, a voltage between 0.72-0.8 times the nominal voltage for 100ms and a voltage between 0.8-0.9 times the nominal voltage for 2 seconds does not lead to the ascertainment that the voltage drop or sag is occurring in the main grid. The voltage threshold and the counter threshold can be precalculated and defined to fit the detection time with the permissible voltage boundary curve VBC.

When the opening time of the switch is considered, as for instance an opening time of 6.6 milliseconds for a thyristor based static switch, a valid detection area VDA is chosen being spaced apart from the permissible voltage boundary curve VBC by the opening time of the switch, like in this case 6.6 milliseconds. When instead of a thyristor based static switch a fast static switch with an opening time of 10 microseconds is used for separating the main grid from the microgrid, the valid detection area VDA may be chosen spaced apart from the permissible voltage boundary curve VBC by 10 microseconds. Such a fast static switch can be particularly beneficial depending on the grid dynamics and perturbations as well as customer choices.

The steps a. to c. of the method according to the present application enable the disconnection of the microgrid from the main grid within a time which is below one current cycle. The steps a. to c. of the method can ensure a so-called fast detection.

The method may additionally comprise steps based on a RMS based calculation and/or phasor-based calculation as known from prior art, preferably to ensure a so-called slow detection. Analogously to steps a. to c. of the method, the RMS based calculation and/or phasor-based can be executed for each couple of lines consisting of a phase-to-phase couple and/or a phase-to-neutral couple. The RMS based calculation and/or phasor-based calculation enables the disconnection of the microgrid from the main grid within a time which is above one current cycle.

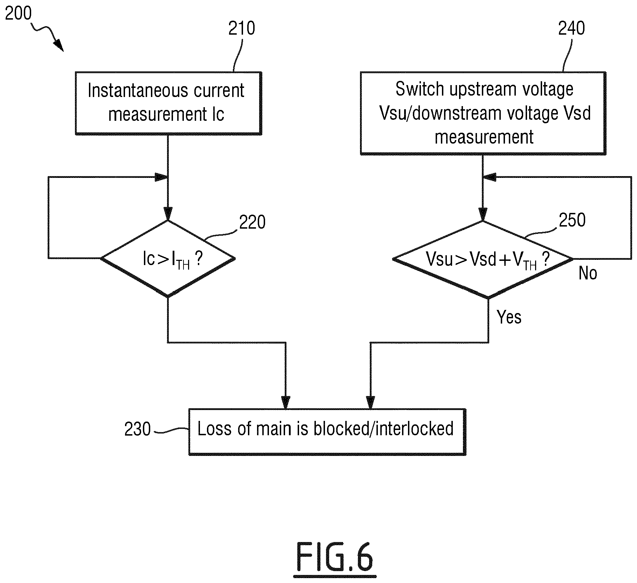

According to a variant, as shown in the flowchart of figure 6, the method may additionally comprise further tests to improve the detection of a voltage drop or sag occurring in a main grid connected to the microgrid.

The method comprises then further selectivity 200 to asses if the voltage drop occurs on the main grid side or on the microgrid side, comprising an instantaneous current measurement 210, the instantaneous current being measured by a unit adapted to measure instantaneous current flowing in the switch 40 through microgrid 10..

The instantaneous measured current Ic is compared 220 to a current threshold I_{TH}, the current threshold that can be configured typically one to ten times of microgrid 10 nominal current.

If the instantaneous measured current Ic is higher than the current threshold I_{TH}, then the step 220 is followed by the step 230 of the loss of main interlocked, and then the microgrid is prohibited to be disconnected from the main grid.

Further, the method comprises a switch voltage measurement 240, comprising upstream voltage measurement to obtain the upstream voltage measured Vsu and downstream voltage measurement to obtain the downstream voltage measured Vsd, followed by a comparison 250 between the difference between the upstream voltage measured Vsu and the downstream voltage measured and a given voltage difference threshold V_{TH}.

If the difference between the upstream voltage measured Vsu and the downstream voltage measured is higher than the given voltage difference threshold V_{TH}, step 250 is followed by the step 230 of loss of main interlocked, and then the microgrid is prohibited to be disconnected from the main grid.

The voltage difference threshold V_{TH} is for example comprised between 0.1 to 10 volt

According to this variant, a loss of main is detected and the microgrid is disconnected from the main grid if the counter holds a value that exceeds the counter threshold (as explained with respect to figure 2) and if the instantaneous measured current Ic is not higher than the current threshold I_{TH} and if difference between the upstream voltage measured Vsu and the downstream voltage measured is not higher than the given voltage difference threshold V_{ST}.

Advantageously, the voltage sag drop detection due disturbance event that occurs inside microgrid, for example a short circuit, can be eliminated. Therefore, improving voltage drop or sag detection occurring in a main grid.

The algorithm is also deployed into a digital signal processor (DSP) and tested using Hardware in the Loop.

The method, the electrical controller and the microgrid according to the present application allow the detection of a voltage drop or sag occurring in a main grid, i.e. a loss of main, that can save critical loads less than 10ms, even if the main grid is a three-phase grid and is a polluted and/or unbalanced network.

The method, the electrical controller and the microgrid according to the present application can deliver the needed results despite a perturbation of the main grid voltage for instance: harmonics, unbalance, phase shift. This is due to the fact that the reference signal is generated with a Double Decoupled Synchronous Frame Phase Locked Loop which can track a positive sequence.

## Claims

1. Method for protecting a microgrid from a voltage drop or sag occurring in a main grid (12) connected to said microgrid (10), the main grid having at least two lines, the method being **characterized in that** is comprises the following steps:
a. supplying power (105) to the microgrid through the main grid;
b. ascertaining that the voltage drop or sag is occurring in the main grid by executing the following steps on at least two lines of the main grid:
i. measuring (110) an instantaneous output voltage between the two lines of the main grid;
ii. comparing (130) the measured instantaneous output voltage between the two lines with a reference instantaneous output voltage for the two lines;
iii. incrementing (140) a counter when the measured instantaneous output voltage differs from the reference instantaneous output voltage by more than a voltage threshold; and
iv. ascertaining (150) that the voltage drop or sag is occurring in the main grid when the counter holds a value that exceeds a counter threshold; and
c. disconnecting (160) the microgrid from the main grid when the voltage drop or sag occurring in the main grid has been ascertained by opening a switch connecting the main grid to the microgrid.

2. Method according to claim 1, wherein the counter is incremented (140) by a value corresponding to an absolute value of a difference between the measured instantaneous output voltage and the reference instantaneous output voltage signal.

3. Method according to any one of the claims 1 or 2, the main grid being a three-phase grid comprising three phase lines and one neutral line, comprising generating (115) the reference instantaneous output voltage signal by means of a Double Decoupled Synchronous Frame Phase Locked Loop.

4. Method according to any one of the claims 1 to 3, the main grid being a three-phase grid having three phase lines and one neutral line, wherein the steps b.i to b.iv are executed for each couple of lines consisting of a phase-to-phase couple and/or a phase-to-neutral couple.

5. Method according to any one of the claims 1 to 4, wherein disconnecting (160) the microgrid from the main grid when the voltage drop or sag occurring in the main grid has been ascertained is achieved by opening a thyristor based static switch connecting the main grid to the microgrid.

6. Method according to any one of the claims 1 to 5, wherein the steps b.i to b.iv are repeated periodically.

7. Electrical controller (20) for protecting a microgrid from a voltage drop or sag occurring in a main grid connected to said microgrid, **characterized in that** it comprises:
• at least one instantaneous output voltage measuring unit (30) configured to measure an instantaneous output voltage between two lines of the main grid;
• at least one reference instantaneous output voltage signal generation unit (32) configured to generate a reference instantaneous output voltage signal for the two lines;
• a comparing unit (34) configured to compare a measured instantaneous output voltage between the two lines with the reference instantaneous output voltage signal for the two lines;
• a counter incrementing unit (36) configured to increment a counter when the measured instantaneous output voltage differs from the reference instantaneous output voltage signal by more than a voltage threshold;
• a counter evaluation unit (38) configured to ascertain the voltage drop or sag occurring in the main grid when the counter holds a value that exceeds a counter threshold; and
• a switch (40) configured to be arranged between the main grid (12) and the microgrid (10) and configured to be opened by the electrical controller (20) when the counter evaluation unit ascertains the voltage drop or sag,
the electrical controller (20) being configured for executing the steps of the method according to any one of the claims 1 to 6.

8. Electrical controller according to claim 7, wherein the switch (40) is a fast disconnecting switch such as a thyristor based static switch, a hybrid breaker, a solid state breaker.

9. Electrical controller according to any one of the claims 7 or 8, wherein the reference instantaneous output voltage signal generation unit (32) comprises a Double Decoupled Synchronous Frame Phase Locked Loop.

10. Microgrid (10) comprising an electronic controller (20) according to any one of the claims 7 to 9.
